# EUROPEAN PATENT SPECIFICATION

(11) **EP 1 069 320 B1**
(45) Date of publication and mention of the grant of the patent: **08.12.2004**
(21) Application number: 00305302.2
(22) Date of filing: 23.06.2000
(51) Int. Cl.: F15B 13/04, F15B 15/28

(54) **Directional control valve having position detecting function**
Vorgesteuertes Wegeventil mit Positionsermittlung
Distributeur pneumatique piloté avec détection de la position

(30) Priority: 12.07.1999 JP 19777699
(43) Date of publication of application: 17.01.2001
(73) Proprietor: SMC CORPORATION, Minato-ku, Tokyo (JP)
(72) Inventor: Hayashi, Bunya, c/o SMC Corporation Tsukuba, Tsukuba-gun, Ibaraki (JP); Ishikawa, Makoto, c/o SMC Corporation Tsukuba, Tsukuba-gun, Ibaraki (JP)
(74) Representative: Findlay, Alice Rosemary

(56) References cited:
- EP-A- 0 631 057
- EP-A- 0 844 425
- JP-U- 2 066 784

## Description

The present invention relates to a directional control valve having a position detecting function in which the detection of operating positions of a valve member such as a spool through the use of a magnet is improved.

A directional control valve capable of detecting the changeover operation of a spool utilising a magnet is well known and is disclosed in, for example, Japanese Unexamined Utility Model Publication No. 2-66784. This known directional control valve is provided with a magnet on the outer periphery of a spool and a magnet sensor on a casing. This directional control valve is arranged so that, when the spool moves to one changeover position, the magnet approaches the magnetic sensor and the magnetic sensor is turned on, and, when the spool moves to the other changeover position, the magnet moves away from the magnetic sensor and the magnetic sensor is turned off. This directional control valve is thus adapted to detect that the spool has been changed over by the on/off of the magnetic sensor.

However, since the magnet is installed in the above-described conventional directional control valve at a position on the outer periphery of the spool and so situated in a fluid passage, the magnet directly contacts the hydraulic fluid. Therefore, when the fluid contains water, chemical mist, particulates of magnetic material such as metallic powder, or the like, there has often arisen the problem that the contact of the magnet with these substances makes the magnet rust, corrode, or adsorb the particulates, thereby causing a reduction in detection accuracy due to a decrease in magnetic force, or causing poor sliding conditions.

Furthermore, since the above-described conventional directional control valve is arranged so that the changeover of the spool is detected by the turning on/off of the magnetic sensor, intermediate stroke positions cannot be detected, only that the spool has reached each of the two stroke ends. It is, therefore, essentially impossible to know whether the spool has operated normally during the whole stroke and reached a stroke end or not. This has created reliability and maintenance problems in executing automatization.

An object of the present invention is to provide a directional control valve which has excellent detecting accuracy and operational stability by having a position detecting function in which the magnet is prevented from directly contacting a hydraulic fluid so that the magnet is not affected by the hydraulic fluid.

Another object of the present invention is to provide a directional control valve with a position detecting function which can detect the operating positions of a valve member over the whole stroke thereof.

EPA 0844425 describes a valve spool detection apparatus in which a shiftable valve spool has a plurality of distinct targets carried thereon. The targets are preferably axially spaced and located at one end of the valve spool. A detector mounted in the valve detects each target as each target enters a detection field of the detector. The detector generates a distinct output indicative of one target positioned within the detection field of the detector. A control determines, in response to the output from the detector, the exact valve spool position.

The present invention provides a directional control valve having a position detecting function, comprising a casing having a plurality of ports and a valve hole into which each of the ports is opened, a valve member for changing over flow passages between the ports, the valve member being slidably received in the valve hole, end sealing members on the outer peripheries of the end portions of the valve member, driving means for driving the valve member, the driving means comprising a piston disposed at each end of the valve member and one or two pilot valves for changing over the valve member by controlling the pilot fluid acting on the pistons, a magnet installed on an end portion of the valve member so as to be displaceable in synchronisation with the valve member, the magnet being disposed at a position which is adjacent to at least one end of the valve member and outward of the end sealing member whereby the magnet is shut off from the fluid flow passages by the end sealing member, and at least one magnetic sensor installed so as to detect the magnetism from the magnet, the at least one magnetic sensor being disposed in the casing at a position opposite to the magnet, characterised in that the valve further comprises breathing chambers defined by the casing, the pistons and the end portions of the valve member and opened to the exterior, the end sealing members shutting off the breathing chambers from the flow passages in the valve hole; in that the magnet is an annular magnet installed in a mounting groove provided adjacent to the breathing chamber at said end of the valve member, and in that the pistons are each abutted against the end face of the valve member.

In the direction control valve having the above-described features, since the magnet for position detecting is disposed at a position shut off from the flow passages of a hydraulic fluid, the magnet is prevented from directly contacting the hydraulic fluid. Therefore, even if the pilot fluid contains water, chemical mist, particles of magnetic material such as metallic particles, or the like, there is no risk of the magnet rusting, corroding, or adsorbing particulates. This prevents a reduction in function, or the occurrence of a malfunction of the valve member due to adsorbed particulates.

The magnet may be directly installed on the outer periphery of the valve member or may be installed on the end portion of the valve member via a holder.

Also, the valve may be provided with one magnet and one magnetic sensor, or with one magnet and a plurality of magnetic sensors.

In accordance with another specific embodiment, the magnetic sensor is installed so as to be able to detect the magnetism from the magnet over the whole stroke of the valve member, and is arranged so as to be able to detect all operating positions of the valve member, from the change in magnetic flux density with the displacement of the magnet.

Thereby, not only the stroke end positions of the piston, but also any intermediate stroke positions can be known. It is therefore possible to easily discriminate, by means of a discrimination circuit, whether the valve member has operated normally or not, from the relationship between the position and the operating time of the valve member from the initiation to the termination of a stroke thereof. This allows precautionary measures to be taken before a failure happens, and prevents a long downtime of a working system due to a failure or an accident.

The invention will now be further described by way of example with reference to the accompanying drawings in which:
Fig. 1 is a longitudinal sectional view of a first embodiment of the directional control valve in accordance with the present invention.
Fig. 2 is an enlarged view showing the main section of Fig. 1.
Fig. 3 is an enlarged view of the main section which is similar to Fig. 2, but which shows a state of operation differing from that in Fig. 2.
Fig. 4 is a sectional view showing the main section of a spool in a second embodiment of the present invention.
Fig. 5 is a longitudinal sectional view showing the main section of a third embodiment of the present invention.

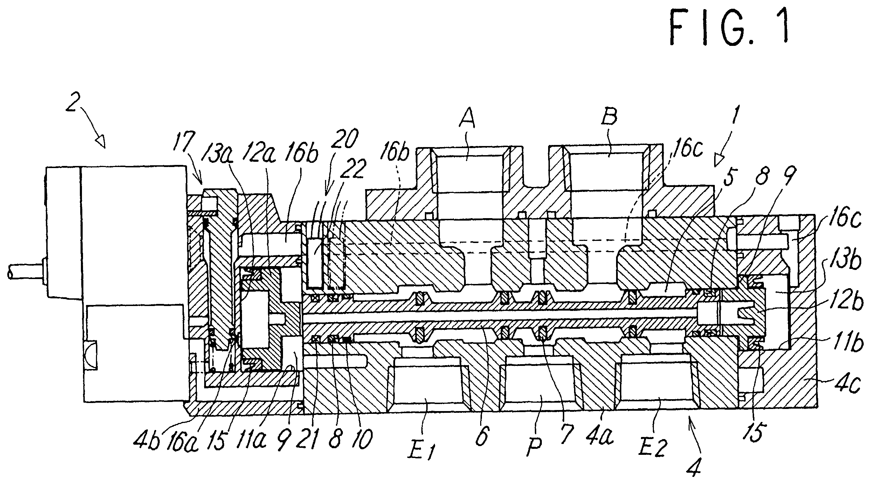

Fig. 1 shows the first embodiment of the directional control valve in accordance with the present invention. The directional control valve here exemplified is a single-pilot type directional control valve wherein a main valve 1 is changed over by one pilot valve 2.

The main valve 1 has a construction as a 5-port valve, and includes a casing 4 constructed of non-magnetic material. The casing 4 comprises a first member 4a which is disposed at the central part and has a substantially cuboid shape, a second member 4b which is connected to one end of the first member 4a and which also serves as an adapter for mounting the pilot valve 2, and a third member 4c which is connected to the other end of the first member 4a and which functions as an end cover.

A supply port P and two discharge ports E1 and E2 are provided on either of the upper and lower surfaces of the first member 4a, and two output ports A and B are provided on the other surface. Inside the first member 4a, there is provided a valve hole 5 to which these ports are each opened being arranged in the axial direction. In the valve hole 5, there is slidably received a spool 6 which is a valve member for changing over flow passages and which is constructed of non-magnetic material.

On the outer periphery of the spool 6, there are provided a plurality of sealing members 7 for mutually defining flow passages connecting the above-mentioned ports, and on the outer peripheries of both end portions of the spool 6, there are provided respective end sealing members 8 for shutting off the breathing chambers 9 facing the end portions of the spool 6, from some flow passages. Reference numeral 10 in Fig. 1 denotes a guide ring for stabilizing the sliding of the spool 6.

On the other hand, in the second member 4b and the third member 4c, the piston chamber 11a and 11b are formed, respectively, at positions facing both ends of the spool 6. A first piston chamber 11a formed in the second member 4b has a large diameter, and a first piston 12a of large diameter is slidably received in the first piston chamber 11a, while a second piston chamber 11b formed in the third member 4c has a smaller diameter than the first piston chamber 11a, and a second piston 12b of small diameter is slidably received in the second piston chamber 11b. These pistons 12a and 12b are each abutted against the end faces of the spool 6. On the back sides of the pistons 12a and 12b, that is, on the sides opposite to the end faces of the pistons abutting against the spool 6, first and second pilot pressure chambers 13a and 13b are formed, respectively. Between the pistons 12a and 12b, and the end faces of the spool 16, there are formed breathing chambers 9 and 9 which are opened to the outside, respectively. The pressure chambers 13a and 13b are hermetically shut off from the breathing chambers 9 and 9 by piston packing 15 and 15 mounted on the outer peripheries of the piston 12a and 12b, respectively.

The first pressure chamber 13a situated adjacent to the first piston 12a of large diameter communicates with the supply port P through the pilot fluid passages 16a and 16b via the above-mentioned pilot valve 2 and a manual operating mechanism 17, while the second pressure chamber 13b situated adjacent to the second piston 12b of small diameter always communicates with the supply port P through the pilot fluid passage 16c.

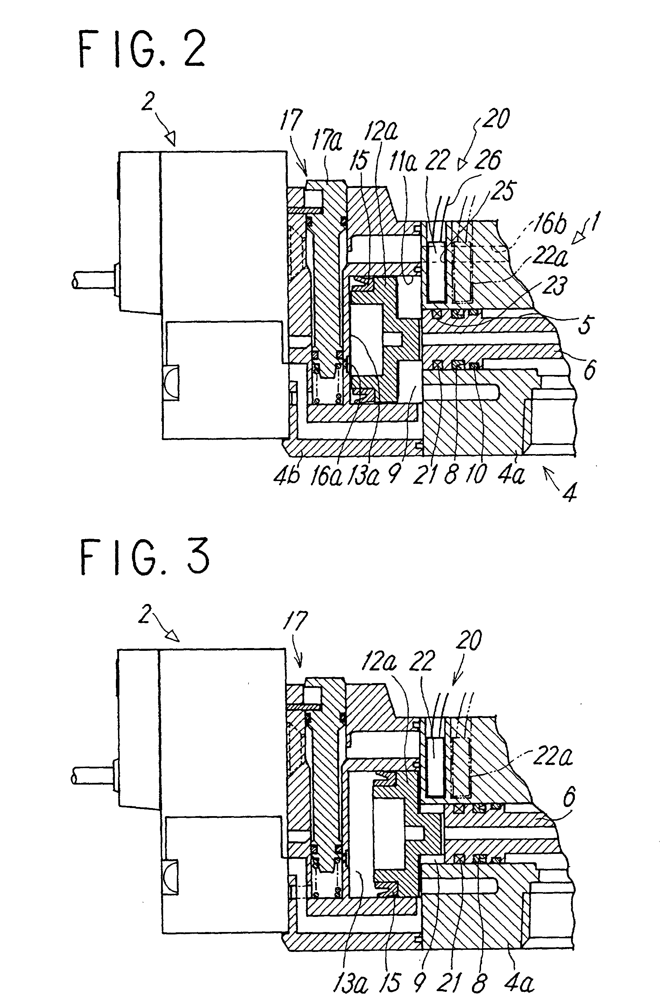

When the pilot valve 2 is in the "off" state, that is, when the first pressure chamber 13a is not supplied with a pilot fluid, the second piston 12b is pushed by the pilot fluid pressure supplied to the second pressure chamber 13b, so that the spool 6 becomes situated at the first changeover position shifted to the left side, as shown in Fig. 1 or Fig. 2. Once the pilot valve 2 is turned "on", that is, the first pressure chamber 13a is supplied with a pilot fluid, the spool 6 is pushed by the first piston 12a, so that the spool 6 moves to the right side and occupies the second changeover position, as shown in Fig. 3. This is because the acting force of fluid pressure acting on the first piston 12a is larger than that acting on the second piston 12b due to the difference in the pressure receiving area between the two piston 12a and 12b.

Here, the spool 6 and each of the pistons 12a and 12b may be coupled.

The above-mentioned manual operating mechanism 17 is adapted to directly connect the pilot fluid passages 16a and 16b by depressing an operating element 17a, and to thereby make the first pressure chamber 13a communicate with the supply port P. This operating state is the same as that in which the pilot valve 2 is "on".

The pilot valve 2 is an electromagnetically operated solenoid valve for opening/closing pilot fluid passages by energizing a solenoid. Since its constitution and operation are the same as the known one, specific explanation thereof is omitted.

The above-described directional control valve is provided with a position detecting mechanism 20 for detecting operating positions of the spool 6. The position detecting mechanism 20 comprises a magnet 21 installed on the spool 6 and a magnetic sensor 22 which is installed at a predetermined position on the casing 4 side and detects the magnetism from the magnet 21. The position detecting mechanism 20 is adapted to detect, by means of the magnetic sensor 22, the magnetic flux density when the magnet 21 moves together with the spool 6, and detects all operating positions of the spool 6 during a stroke, from the changes in magnetic flux density.

The above-described magnet 21 is produced by mixing the metallic powder having magnetic property into soft elastic base material such as synthetic resin or synthetic rubber and forming the obtained mixture into annular body having a notch at a part of circumference thereof. The magnet 21 is installed on the outer periphery of any one end side of the spool 6, for example, on the outer periphery of the end portion of the spool 6 opposite to the first piston 12a, as in the case of the present embodiment, so as to be situated at a position which is adjacent to the breathing chamber 9 and is more exterior than the end sealing member 8. More specifically, the magnet 21 is installed at the above-mentioned position by fitting the annular magnet 21 into a mounting groove 23 formed on the outer periphery of the end portion of the spool 6, in a state where the diameter thereof is elastically expanded.

In this case, it is preferable to make the thickness of the magnet 21 slightly less than the depth of the mounting groove 23 so that the outer peripheral surface of the magnet 21 becomes lower than that of the spool 6 in order to prevent the outer peripheral surface of the valve hole 5 from rubbing against the inner peripheral surface of spool 6. This permits not only the prevention of the increase in sliding resistance of the piston 12a due to the rubbing of the magnet 21 against the inner peripheral surface of the spool 6, but also the prevention of suffering an adverse effect on the sliding of the spool 6 even if the magnet 21 adsorbs some magnetic particulates in the atmosphere.

Thus, by disposing the magnet 21 at a position which is adjacent to the breathing chamber 9 and is more exterior than the end sealing member 8 of an end of the spool 6 so as to be shut off from the flow passages of the hydraulic fluid in the valve hole 5, the magnet 21 can be prevented from directly contacting the pilot fluid. As a consequence, even if the pilot fluid contains water, chemical mist, magnetic particles such as metallic powder, or the like, there is no risk of the magnet rusting, corroding, or adsorbing magnetic particulates due to the contact of the magnet 21 with these substances. This prevents the reduction in position detecting accuracy due to the decrease in magnetic force, or the occurrence of a malfunction of the spool 6 due to adsorbed particulates.

On the other hand, the magnetic sensor 22 is installed at a position adjacent to the magnet 21, in the housing 25 formed in the first member 4a of the casing 4, so as to be able to detect the magnetism from the magnet 21 over the whole stroke of the spool 6. More specifically, the magnetic sensor 22 is installed at a position such that the magnetic sensor 22 is the closest to the magnet 21 when the piston 12a is situated at any one of the stroke ends. Thereby, the magnetic sensor 22 detects the highest magnetic flux density when the spool 6 is situated at the above-mentioned stroke end of the spool 6, and detects the lowest magnetic flux density when the spool 6 is situated at the other end of the spool 6. In this case, the lowest magnetic flux density may be zero.

The magnetic sensor 22 is adapted to be connected to a discriminating circuit (not shown) through a lead wire 26, and to output a detection signal in response to a magnetic flux density to this discriminating circuit. In this discriminating circuit, data necessary for position detecting such as the interrelations of each operating position with the magnetic flux density, operating time, and fluid pressure when the spool 6 normally operates, have been inputted in advance. Once a detection signal from the magnetic sensor 22 is inputted, the discrimination circuit measures the positions of both stroke ends of the spool 6 and each position during a stroke based on the above-mentioned data, and can discriminate whether the operation of the spool 6 has been normal or not, from the relations between the operating time and the position of the spool 6 from the initiation to the termination of a stroke thereof. Thereby, it is possible to detect a sign of failure and to take precautionary measures against a failure, and thereby to avoid an situation such that the operation of device stops for a long time due to the occurrence of a failure or an accident.

Herein, the operating positions, the operating times, etc. for the spool 6 which have been detected, can be displayed on a display device in the form of numeral values or graphs.

In the above-described embodiment, one magnetic sensor 22 is disposed so as to be situated at a position opposite to the magnet 21 at one stroke end, but the magnetic sensor 22 may be disposed at any suitable position within the moving range of the magnet 21, if only the position is one from which the operating positions over the whole stroke of the spool 6 can be identified from the change in magnetic flux density.

Alternatively, two magnetic sensors 22 and 22a may be each provided at a position opposite to the magnet 21 on both stroke ends of the spool 6, as shown with a solid line and a chain line in Figs. 2 and 3. In this case, when the spool 6 is situated at the stroke end shown in Fig. 2, the first magnetic sensor 22 detects the highest magnetic flux density, and the second magnetic sensor 22a detects the lowest magnetic flux density. When the spool 6 is situated at the stroke end shown in Fig. 3, the second magnetic sensor 22a detects the highest magnetic flux density, and the first magnetic sensor 22 detects the lowest magnetic flux density. When the spool 6 is situated on the way of a stroke, the two magnetic sensors 22, 22a detect the magnetic flux densities in accordance with the distance from the magnet 21. Thereby, it is possible to know operating the positions of the spool 6 from the changes in magnetic flux density detected by the two magnetic sensors 22, 22a.

Here, the above-described second magnetic sensor 22a may be disposed on the other end side of the spool 6. In this case, on the other end side, the second magnet is installed. The positional relations between the two sets of magnets and magnetic sensors situated at both ends of the spool 6 is as follows. At one stroke end of the spool 6, when one magnetic sensor detects the highest magnetic flux density, the other magnetic sensor detects the lowest magnetic flux density. At the other stroke end, the situation is in inverse relation to the former case.

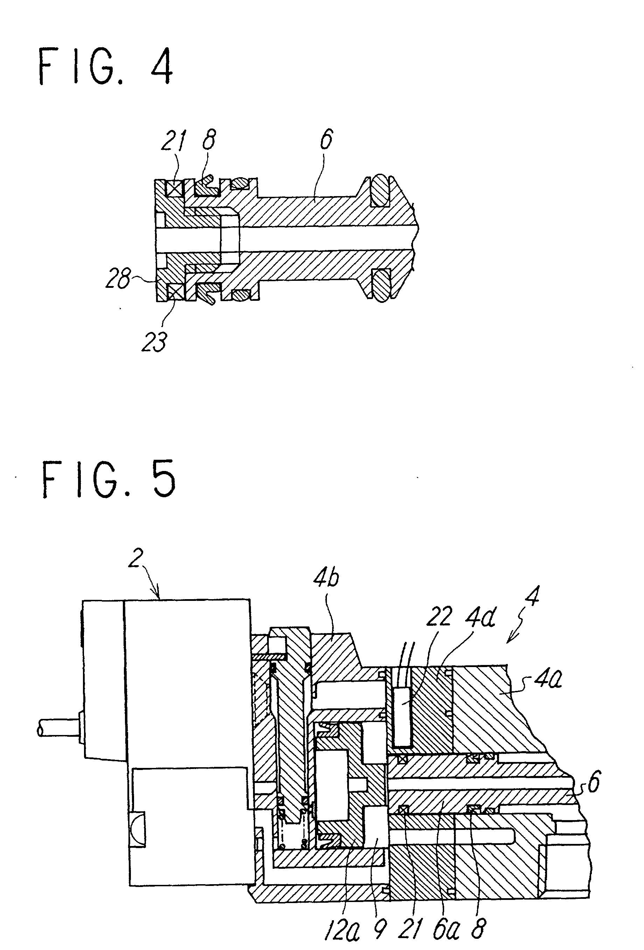

In the above-described embodiment, the magnet 21 is directly mounted on the outer periphery of the spool 6, but may be mounted indirectly thereon via a holder. For example, as in the second embodiment shown in Fig. 4, the magnet 21 may be mounted in the manner wherein a plug-shaped holder 28 formed of non-magnetic material is screwed into the end face of the spool 6, and wherein the magnet 21 is installed into the mounting groove 23 which is formed between the step portion on the outer periphery of this holder 28 and the end face of the spool 6. Alternatively, the magnet 21 may be installed in the other manner wherein an independent mounting groove is formed on the outer periphery of the above-mentioned holder 28, wherein the magnet is installed in this mounting groove, and wherein the holder is coupled to the end face of the spool 6 with a suitable means such as screwing.

Fig. 5 shows the main section of the third embodiment of the present invention. The difference between the above-described first embodiment and the third embodiment is that in the first embodiment the magnetic sensor 22 is directly installed on the first member 4a of the casing 4, whereas in the third embodiment the forth member 4d dedicated to sensor mounting is interposed between the first member 4a and the second member 4b, and the magnetic sensor 22 is installed on this forth member 4d. In this case, the end portion of the spool 6 is extended by the length of the size of the forth member 4d, and the magnet 21 is installed on the extended portion 6a.

Since constitutions and operations, or modifications of the third embodiment other than the foregoing are substantially the same as those of the first embodiment, description thereof is omitted.

In each of the above-described embodiments, as the valve member, a spool was shown, but the valve member is not limited to a spool. For example, even if the valve member is of a poppet type, the present invention may be applied to it, if it has, on at least one end side, a sliding portion for sliding in the valve hole, and if it has, on this sliding portion, an end sealing member for shutting off the breathing chamber from the flow passages. Also, the directional control valve of the present invention may be of a spring-return type which has a return spring in place of the second piston 12b of small diameter, and which always energizes the spool in the return direction by the return spring.

Furthermore, the type of the directional control valve is not particularly limited to the single-pilot type as in the above-described embodiments, but a double-pilot type directional control valve may be used, or a direct-acting type directional control valve in which the valve member is directly driven by electromagnetic or mechanical driving means may be employed.

Moreover, the above-described position detecting mechanism 20 does not necessarily require using the above-described method in which all operating positions of the spool are detected from the change in magnetic flux density with the movement of the spool, but the position detecting mechanism 20 may use a method in which only both stroke ends of the spool are detected at both stroke ends of the spool by turning on/off the magnetic sensor.

As has been described hereinbefore in detail, in accordance with the present invention, there is provided a directional control valve excellent in the detecting accuracy and the operational stability and having a position detecting function, wherein the magnet is prevented from directly contacting hydraulic fluid so as not to be affected by the hydraulic fluid.

## Claims

1. A directional control valve having a position detecting function, comprising a casing (4) having a plurality of ports (P, E1, E2, A, B) and a valve hole (5) into which each of the ports is opened, a valve member (6) for changing over flow passages between the ports, the valve member (6) being slidably received in the valve hole, end sealing members (8) on the outer peripheries of the end portions of the valve member (6), driving means for driving the valve member, the driving means comprising a piston (12a, 12b) disposed at each end of the valve member (6) and one or two pilot valves (2) for changing over the valve member (6) by controlling the pilot fluid acting on the pistons (12a, 12b), a magnet (21) installed on an end portion of the valve member (6) so as to be displaceable in synchronisation with the valve member (6), the magnet being disposed at a position which is adjacent to at least one end of the valve member and outward of the end sealing member whereby the magnet is shut off from the fluid flow passages by the end sealing member (8), and at least one magnetic sensor (22) installed so as to detect the magnetism from the magnet (21), the at least one magnetic sensor (22) being disposed in the casing at a position opposite to the magnet, **characterised in that** the valve further comprises breathing chambers (9) defined by the casing (4), the pistons (12a, 12b) and the end portions of the valve member (6) and opened to the exterior, the end sealing members (8) shutting off the breathing chambers (9) from the flow passages in the valve hole (5); **in that** the magnet is an annular magnet (21) installed in a mounting groove (23) provided adjacent to the breathing chamber at said end of the valve member, and **in that** the pistons (12a, 12b) are each abutted against the end face of the valve member (6).

2. A directional control valve as claimed in Claim 1, wherein the mounting groove (23) is formed on the outer periphery of the valve member (6).

3. A directional control valve as claimed in Claim 1, wherein the magnet is installed on the valve member by a holder (28) connected to the end portion of the valve member (6).

4. A directional control valve as claimed in any preceding Claim wherein the directional control valve has one magnet (21) and a plurality of magnet sensors (22) simultaneously detecting the magnetism from the magnet.

5. A directional control valve as claimed in any one of Claims 1 to 3 wherein the magnetic sensor (22) is disposed at a position where it can detect the magnetism from the magnet (21) over the whole stroke of the valve member, and wherein the magnetic sensor (22) can detect all operating positions of the valve member from the change in magnetic flux density with the displacement of the magnet.

## Patentansprüche

1. Vorgesteuertes Wegeventil mit Positionsermittlung, bestehend aus einem Gehäuse (4) mit einer Anzahl von Anschlüssen (P, E1, E2, A, B) und einer Ventilbohrung (5), in die jeder Anschluss mündet, einem Ventilschieber (6) zum Wechseln der Strömungswege zwischen den Anschlüssen, wobei der Ventilschieber (6) verschiebbar in der Ventilbohrung geführt wird, Abschlussdichtungsschiebern (8) an den äußeren Rändern der Seiten des Ventilschiebers (6), Steuermitteln zum Steuern des Ventilschiebers, wobei die Steuermittel einen Kolben (12a, 12b) auf jeder Seite des Ventilschiebers (6) und ein oder zwei Vorsteuerventile (2) zum Stellen des Ventilschiebers (6) durch Steuern der auf die Kolben (12a, 12b) wirkenden Vorsteuerflüssigkeit umfassen, einem Magneten (21), der so an einer Seite des Ventilschiebers (6) angebaut ist, dass er im Gleichlauf mit dem Ventilschieber (6) verschoben werden kann, wobei der Magnet an einer Stelle vorgesehen ist, die an mindestens eine Seite des Ventilschiebers angrenzt und sich außerhalb des Abschlussdichtungsschiebers befindet, wodurch der Magnet durch den Abschlussdichtungsschieber (8) von den Flüssigkeitsströmungswegen ausgeschlossen ist, und mindestens einem Magnetsensor (22), der so eingebaut ist, dass er die Magnetkraft des Magneten (21) erfasst, wobei mindestens ein Magnetsensor (22) im Gehäuse an einer Stelle gegenüber dem Magneten angeordnet ist, **dadurch gekennzeichnet, dass** das Ventil ferner Lüftungskammern (9) umfasst, die durch das Gehäuse (4), die Kolben (12a, 12b) und die Seiten des Ventilschiebers (6) begrenzt sind und nach außen münden, wobei die Abschlussdichtungsschieber (8) die Lüftungskammern (9) gegenüber den Strömungswegen in der Ventilbohrung (5) absperren; dadurch, dass der Magnet ein Ringmagnet (21) ist, der in einer Einsatzkehlung (23) eingebaut ist, die angrenzend an die Lüftungskammer auf dieser Seite des Ventilschiebers vorgesehen ist, und dadurch, dass die Kolben (12a, 12b) an die jeweilige Endfläche des Ventilschiebers (6) stoßen.

2. Vorgesteuertes Wegeventil nach Anspruch 1, wobei die Einsatzkehlung (23) am Außenrand des Ventilschiebers (6) ausgeformt ist.

3. Vorgesteuertes Wegeventil nach Anspruch 1, wobei der Magnet durch einen mit der Seite des Ventilschiebers (6) verbundenen Halter (28) am Ventilschieber eingebaut ist.

4. Vorgesteuertes Wegeventil nach einem der vorstehenden Ansprüche, wobei das vorgesteuerte Wegeventil einen Magneten (21) und eine Anzahl von Magnetsensoren (22) besitzt, die den Magnetismus des Magneten gleichzeitig erfassen.

5. Vorgesteuertes Wegeventil nach einem der Ansprüche 1 bis 3, wobei der Magnetsensor (22) an einer Stelle vorgesehen ist, wo er den Magnetismus des Magneten (21) über den gesamten Laufweg des Ventilschiebers erfassen kann, und wobei der Magnetsensor (22) alle Arbeitsstellungen des Ventilschiebers anhand der Veränderung der magnetischen Flussdichte mit der Verschiebung des Magneten erfassen kann.

## Revendications

1. Soupape de réglage directionnelle possédant une fonction de détection de position, comprenant un boîtier (4) ayant une pluralité de ports (P, E1, E2, A, B) et un trou de soupape (5) dans lequel chacun des ports est ouvert, un élément de soupape (6) en vue de changer les passages d'écoulement entre les ports, l'élément de soupape (6) étant reçu de manière coulissante dans le trou de soupape, des éléments d'étanchéité d'extrémité (8) sur les périphéries externes des portions d'extrémité de l'élément de soupape (6), un moyen d'entraînement en vue d'entraîner l'élément de soupape, le moyen d'entraînement comprenant un piston (12a, 12b) disposé à chaque extrémité de l'élément de soupape (6) et une ou deux soupapes pilotes (2) en vue de changer l'élément de soupape (6) en contrôlant le fluide pilote agissant sur les pistons (12a, 12b), un aimant (21) installé sur une portion d'extrémité de l'élément de soupape (6) de manière à être déplaçable en synchronisation avec l'élément de soupape (6), l'aimant étant disposé à une position qui est adjacente à au moins une extrémité de l'élément de soupape et à l'extérieur de l'élément d'étanchéité d'extrémité, ce par quoi l'aimant est isolé des passages d'écoulement de fluide par l'élément d'étanchéité d'extrémité (8), et au moins un capteur magnétique (22) installé de manière à détecter le magnétisme provenant de l'aimant (21), l'au moins un capteur magnétique (22) étant disposé dans le boîtier à une position opposée à l'aimant, **caractérisée en ce que** la soupape comprend en outre des chambres de respiration (9) définies par le boîtier (4), les pistons (12a, 12b) et les portions d'extrémité de l'élément de soupape (6) et ouvertes vers l'extérieur, les éléments d'étanchéité d'extrémité (8) isolant les chambres de respiration (9) des passages d'écoulement dans le trou de soupape (5) ; **en ce que** l'aimant est un aimant annulaire (21) installé dans une rainure de montage (23) prévue de manière adjacente à la chambre de respiration au niveau de ladite extrémité de l'élément de soupape, et **en ce que** les pistons (12a, 12b) butent chacun contre la face d'extrémité de l'élément de soupape (6).

2. Soupape de réglage directionnelle selon la revendication 1, dans laquelle la rainure de montage (23) est formée sur la périphérie externe de l'élément de soupape (6).

3. Soupape de réglage directionnelle selon la revendication 1, dans laquelle l'aimant est installé sur l'élément de soupape par un teneur (28) relié à la portion d'extrémité de l'élément de soupape (6).

4. Soupape de réglage directionnelle selon l'une quelconque des revendications précédentes, dans laquelle la soupape de réglage directionnelle possède un aimant (21) et une pluralité de capteurs magnétiques (22) détectant simultanément le magnétisme provenant de l'aimant.

5. Soupape de réglage directionnelle selon l'une quelconque des revendications 1 à 3, dans laquelle le capteur magnétique (22) est disposé à une position où il peut détecter le magnétisme provenant de l'aimant (21) sur la course entière de l'élément de soupape, et dans laquelle le capteur magnétique (22) peut détecter toutes les positions de fonctionnement de l'élément de soupape à partir du changement de densité de flux magnétique avec le déplacement de l'aimant.
